# EUROPÄISCHE PATENTSCHRIFT

(11) **EP 1 358 439 B1**
(45) Veröffentlichungstag und Bekanntmachung des Hinweises auf die Patenterteilung: **06.08.2008**
(21) Anmeldenummer: 01270737.8
(22) Anmeldetag: 13.12.2001
(51) Int. Cl.: F25B 43/00, F16K 31/06, F16K 11/065, F25B 5/02

(54) **MAGNETVENTIL**
SOLENOID VALVE
VANNE ELECTROMAGNETIQUE

(30) Priorität: 15.12.2000 DE 10062666
(43) Veröffentlichungstag der Anmeldung: 05.11.2003
(73) Patentinhaber: BSH Bosch und Siemens Hausgeräte GmbH, 81739 München (DE)
(72) Erfinder: MAIER, Roland, 73450 Neresheim (DE)
(86) Internationale Anmeldenummer: PCT/EP2001/014717
(87) Internationale Veröffentlichungsnummer: WO 2002/048623

(56) Entgegenhaltungen:
- DE-A- 1 501 108
- DE-A- 2 723 365
- DE-A- 19 546 384
- DE-A- 19 547 744
- DE-A- 19 647 011
- US-A- 2 659 128
- US-A- 3 656 625
- US-A- 5 218 996

## Beschreibung

Die vorliegende Erfindung betrifft ein Magnetventil für einen Kältekreislauf, mit wenigstens einem Ausgang und mit einem Eingang, dem ein Partikelfilter vorgeschaltet ist, wobei das Magnetventil mit einem Kältemitteltrockner verbunden und das Partikelfilter Teil des Kältemitteltrockners ist.

Ein derartiges Magnetventil ist aus der DE 195 47 744 A1 bekannt.

Derartige Magnetventile werden üblicherweise von den Herstellern der Kältegeräte als Fertigteile eingekauft und in den Kältemittelkreislauf montiert. Die eingekauften Magnetventile sind üblicherweise an Ein- und Ausgängen mit einer Schutzkappe versehen, die das Eindringen von Fremdkörpern in das Ventil vor dessen Einbau verhindern. Im Fertigungsablauf ist es jedoch erforderlich, diese Kappen zu entfernen. Folge ist, dass Schmutz in das Ventil eindringen kann. Diese Möglichkeit stellt für den Hersteller des Kältegeräts ein erhebliches Problem dar, denn eine solche Verschmutzung führt meist nicht unverzüglich zum Versagen des Ventils, so dass eine Erfassung noch im Werk durch Qualitätskontrolle möglich wäre, sondern häufig führt ein solches Magnetventil noch eine große Zahl von Schaltvorgängen korrekt durch, bevor ein solcher Schmutzpartikel eine Stelle erreicht, wo er die Schaltwirkung des Ventils beeinträchtigen oder blockieren kann und zu einer Störung führt. Derartige Störungen sind kostspielig und aufwendig zu beheben, denn sie treten im Allgemeinen erst beim Anwender des Kältegeräts auf, so dass zu Ihrer Behebung ein Servicetechniker den Anwender aufsuchen muss.

Es besteht daher erhebliches Interesse daran ein Magnetventil, insbesondere für einen Kältekreislauf eines Kältegeräts zu schaffen, bei dem das Eindringen von Fremdkörpern in das Ventil auch während dessen Montage praktisch ausgeschlossen ist.

Diese Aufgabe wird gemäß der Erfindung gelöst durch die Merkmale des Patentanspruches 1 durch eine Baueinheit, bestehend aus einem Magnetventil und einem Kältemitteltrockner, verringert sich die Zahl der Teile eines solchen Kältemittelkreislaufs und damit auch der für die Montage erforderliche Arbeitsaufwand bzw. deren Kosten. Eine solche Baueinheit kann genauso wie bislang das Magnetventil oder der Kältemitteltrockner für sich alleine als Baueinheit vorgefertigt und bei der Montage in einem Kältekreislauf eingefügt werden.

Alternativ kann das Partikelfilter durch ein Fein- oder Sintersieb gebildet sein.

Besonders vorteilhaft ist es, wenn es sich bei dem Partikelfilter um ein Fein- oder Sintersieb handelt, das als ein Teil des Kältemitteltrockners ein Entweichen des - zumeist körnigen - Kältemittels aus diesem verhindert.

Ein solcher Kältemitteltrockner hat herkömmlicherweise ein im wesentlichen rohrförmiges Gehäuse, das bei der Montage des Kältemittelkreislaufs über eine zwischengeschaltete Rohrleitung mit dem Magnetventil verbunden wird. Erfindungsgemäß hingegen ist das Rohr, dass das einteilige Gehäuse des Kältemitteltrockners bildet, mit einem Ende direkt an den Eingang des Magnetventils angeschlossen.

Um das Anschließen des Trockners an das Magnetventil zu erleichtern, ist das Gehäuse von letzterem vorzugsweise zu seinem an den Eingang des Magnetventils anzuschließenden Ende hin durch Umformung verjüngt, so dass es bequem, z.B. durch Löten, in einer seitlichen Öffnung des Gehäuses des Magnetventils eingefügt und befestigt werden kann.

Das Magnetventil selbst kann ebenfalls ein rohrförmiges Gehäuse aufweisen, das zu jedem seiner Enden, das einen Ausgang bildet, hin verjüngt ist. Genauso wie beim Gehäuse des Kältemitteltrockners wird diese Verjüngung vorzugsweise nach Einfügen aller erforderlichen Komponenten ins Innere des Rohres durch Umformen erzeugt.

Die Ausgänge des Magnetventils sind durch das Eindringen von Schmutz bzw. Fremdpartikeln weniger gefährdet als der Eingang, da in einen Ausgang eingedrungene Fremdpartikel im Laufe des Betriebs des Kältemittelkreislaufs dazu neigen, aus dem Magnetventil herausgespült zu werden und spätestens nach einem Durchgang durch den Kältemittelkreislauf an dem Partikelfilter abgefangen werden. Um dennoch auch hier das Eindringen von Fremdpartikeln zu bekämpfen, kann es zweckmäßig sein, einen Ausgang des Magnetventils als Kapillare auszubilden. Eine solche Kapillare, die sich vorzugsweise über eine Länge von mehreren Zentimetern erstreckt, kann gleichzeitig als Vorrichtung zum Entspannen des unter hohem Druck in das Magnetventil eintretenden Kältemittels eingesetzt werden. Durch die Möglichkeit, das stromabwertige Ende einer solchen Kapillare direkt an den Verdampfer des Kältemittelkreislaufs abzuschließen, vereinfacht sich dessen Aufbau weiter.

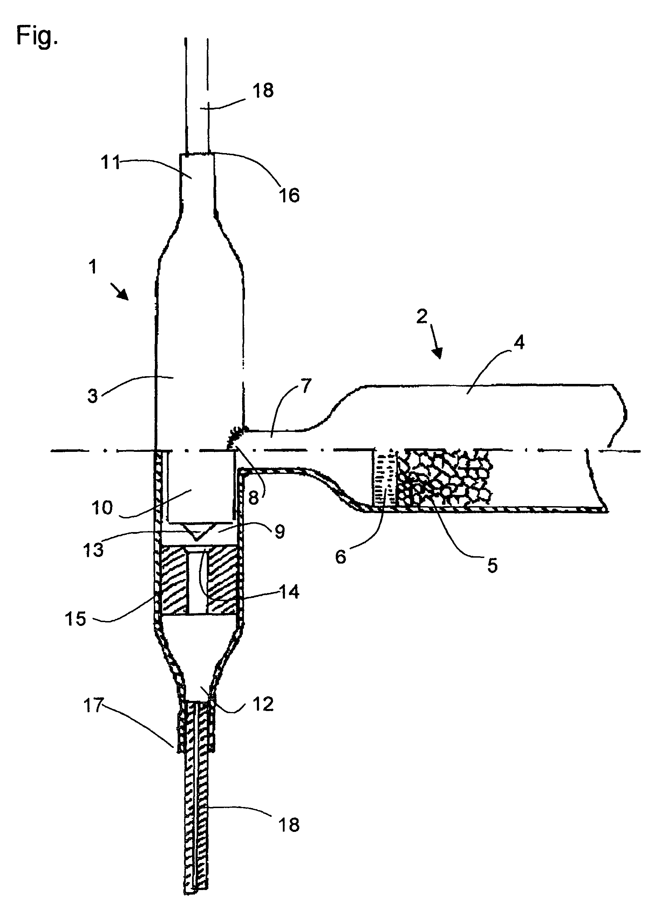

Weitere Merkmale und Vorteile der Erfindung ergeben sich aus der nachfolgenden Beschreibung eines Ausführungsbeispiels mit Bezug auf die beigefügte Figur. Die Figur zeigt in einer Draufsicht im Teilschnitt eine Baueinheit mit einem Magnetventil 1 und einem Kältemitteltrockner 2, die zum Einbau in einem Kältemittelkreislauf eines Kombinations-Kältegeräts vorgesehen sind. Magnetventil 1 und Kältemitteltrockner 2 weisen jeweils ein einteiliges, rohrförmiges Gehäuse 3 bzw. 4 auf, das jeweils aus einem Kupferrohr von konstantem Durchmesser geschnitten und nach Einfügen der funktionsnotwendigen Einbauten an seinen Enden verjüngt worden ist. Das Gehäuse 4 des Kältemitteltrockners 2 ist weitgehend mit einem körnigen Trocknermaterial 5 ausgefüllt. Ein Partikelsieb 6 am stromabwärtigen Ende 7 des Gehäuses 4 erstreckt sich quer durch das Gehäuse 4 und verhindert den Durchtritt von Trocknermaterial 5 sowie von Fremdpartikeln, die möglicherweise im Laufe der Montage in das Gehäuse 4 an einem dem Ende 7 gegenüberliegenden, in der Figur nicht dargestellten Ende eintreten können, ins Innere des Magnetventils 1.

Das verjüngte Ende 7 des Trocknergehäuses 4 ist in eine seitliche Bohrung des Ventilgehäuses 3 eingefügt und darin verlötet. Diese Bohrung bildet den Eingang 8 des Magnetventils 1. Er mündet auf eine Kammer 9, in der ein Ventilglied 10 in Längsrichtung des Gehäuses 3 unter der Einwirkung von in der Fig. nicht gezeigten Magneten zwischen zwei Endstellungen hin und her beweglich ist, die jeweils der Verbindung des Eingangs 8 mit einem der zwei Ausgänge 11, 12 des Magnetventils 1 entsprechen. Anordnung und Wirkungsweise der Magnete wird hier nicht im Detail beschrieben, da sie nicht Gegenstand der vorliegenden Erfindung ist. Die Arbeitsweise eines solchen Magnetventils ist z.B. in DE 37 18 490 A1 beschrieben.

Die Fig. zeigt das Ventilglied 10 in einer Stellung, in der ein Dichtkegel 13 des Ventilgliedes 10 von einem zugewandten Ventilsitz 14 an einem Längsende der Kammer 9 beabstandet ist und so den Fluss von Kältemittel vom Eingang 8 zum Ausgang 12 zuläßt, wohingegen ein in der Fig. nicht gezeigter Dichtkegel 13 am gegenüberliegenden Ende des Ventilglieds 10 an einem diesem Ende zugeordneten Ventilsitz dichtend anliegt und so den Durchgang von Kältemittel zum Ausgang 11 sperrt. Durch Verlagern des Ventilglieds 10 nach unten in der Figur wird der Durchgang zum Ausgang 12 versperrt und zum Ausgang 11 geöffnet.

Das Magnetventil 1 kann auf einfache Weise zusammengesetzt werden, in dem nacheinander ein erster, einen Ventilsitz tragender hohlzylindrischer Körper 15, das Ventilglied 10 und ein zweiter Körper 15 unter Belassung einer Bewegungsfreiheit des Ventilgliedes 10 in ein Rohrstück eingeführt werden, anschließend das Rohrstück in Höhe der hohlzylindrischen Körper 15 verpresst wird, um letzteren einen festen Halt in dem Rohrstück zu geben, und anschließend die über die hohlzylindrischen Körper 15 überstehenden Enden 16, 17 des Rohrstücks zu der in der Fig. gezeigten Form verjüngt werden. In die verjüngten Enden 16, 17 wird anschließend eine Ausgangs-Rohrleitung eingefügt und dicht verlötet. Bei dieser Ausgangsrohrleitung handelt es sich vorzugsweise um eine Kapillare 18, die als Mittel zum Entspannen des Kältemittels nach dessen Durchgang durch den Kältemitteltrockner 2 und das Magnetventil 1 und vor dessen Eintritt in einen (nicht dargestellten) Verdampfer des Kältemittelkreises dient. In Folge des geringen Innendurchmessers der Kapillare, der bei einem Haushalts-Kältegerät typischerweise einige Hundert µm beträgt, und ihrer Länge von typischerweise 10 cm und mehr ist es praktisch ausgeschlossen, dass im Laufe der Montage der aus Magnetventil 1, Kapillaren 18 und Kältemitteltrockner 2 bestehenden Baueinheit in einem Kältemittelkreislauf Fremdpartikel durch das zeitweilig offene freie Ende der Kapillare eindringen und das Magnetventil erreichen können.

Selbstverständlich ist die Erfindung nicht auf Magnetventile mit zwei Ausgängen beschränkt; das durch das Partikelsieb geschützte Ventil kann auch einen einzelnen Ausgang oder mehr als zwei haben.

## Patentansprüche

1. Magnetventil (1) für einen Kältekreis mit wenigstens einem Ausgang (11, 12) und einem Eingang (6), dem ein Partikelfilter (6) vorgeschaltet ist, das Teil eines Kältemitteltrockners ist, wobei das Magnetventil (1) mit dem Kältemitteltrockner (2) zu einer Baueinheit verbunden ist.

2. Magnetventil nach Anspruch 1, **dadurch gekennzeichnet, dass** das Partikelfilter (6) durch einen Fein- oder Sintersieb gebildet ist.

3. Magnetventil nach Anspruch 2, **dadurch gekennzeichnet, dass** das Fein- oder Sintersieb zwischen einer Trockenmittelkammer des Kältemitteltrockners (2) und dem Eingang (8) des Magnetventils (1) angeordnet ist.

4. Magnetventil nach Anspruch 3, **dadurch gekennzeichnet, dass** der Kältemittetrockner (2) ein einteiliges Gehäuse (4) in Form eines Rohres aufweist, von dem ein Ende (7) an den Eingang (8) des Magnetventils (1) angeschlossen ist.

5. Magnetventil nach Anspruch 4, **dadurch gekennzeichnet, dass** das Gehäuse (4) des Kältemitteltrockners (2) zu seinem an den Eingang (8) angeschlossenen Ende (7) hin durch Umformung verjüngt ist.

6. Magnetventil nach einem der Ansprüche 1 bis 5, **dadurch gekennzeichnet, dass** es ein rohrförmiges Gehäuse (3) aufweist, das zu jedem seiner Enden (16, 17), das einen Ausgang (11, 12) bildet, hin verjüngt ist.

7. Magnetventil nach einem der Ansprüche 1 bis 7, **dadurch gekennzeichnet, dass** es wenigstens einen als Kapillare (18) ausgebildeten Ausgang (11, 12) aufweist.

## Claims

1. Magnetic valve (1) for a refrigerating circuit with at least one outlet (11, 12) and an inlet (6), upstream of which is a particle filter (6) which is part of a refrigerant drier, wherein the magnetic valve (1) is connected with the refrigerant drier (2) to form a subassembly.

2. Magnetic valve according to claim 1, **characterised in that** the particle filter is formed by a fine sieve or sinter sieve.

3. Magnetic valve according to claim 2, **characterised in that** the fine or sinter sieve was arranged between a drying agent chamber of the refrigerant drier (2) and the inlet (8) of the magnetic valve (1).

4. Magnetic valve according to claim 3, **characterised in that** the refrigerant drier (2) is a unitary housing (4) in the form of a tube, of which one end (7) is connected with the inlet (8) of the magnetic valve (1).

5. Magnetic valve according to claim 4, **characterised in that** the housing (4) of the refrigerant drier (2) is narrowed at its end (7), which is connected with the inlet (8), by deforming.

6. Magnetic valve according to any one of claims 1 to 5, **characterised in that** it comprises a tubular housing (3) which is narrowed at each of its ends (16, 17) forming an outlet (11, 12).

7. Magnetic valve according to any one of claims 1 to 7, **characterised in that** it comprises at least one outlet (11, 12) constructed as a capillary (18).

## Revendications

1. Vanne électromagnétique (1) pour un circuit de refroidissement comprenant au moins une sortie (11, 12) et une entrée (6), en amont de laquelle est monté un filtre à particules (6), qui fait partie d'un sécheur réfrigérant, la vanne électromagnétique (1) étant reliée au sécheur réfrigérant (2) pour former un module.

2. Vanne électromagnétique selon la revendication 1, **caractérisée en ce que** le filtre à particules (6) est formé par un tamis fin ou un filtre fritté.

3. Vanne électromagnétique selon la revendication 2, **caractérisée en ce que** le tamis fin ou le tamis fritté est disposé entre une chambre d'agent déshydratant du sécheur réfrigérant (2) et l'entrée (8) de la vanne électromagnétique (1).

4. Vanne électromagnétique selon la revendication 3, **caractérisée en ce que** le sécheur réfrigérant (2) présente un boîtier (4) d'une seule pièce sous la forme d'un tuyau à partir duquel une extrémité (7) est raccordée à l'entrée (8) de la vanne électromagnétique (1).

5. Vanne électromagnétique selon la revendication 4, **caractérisée en ce que** le boîtier (4) du sécheur réfrigérant (2) est rétréci par une déformation en direction de son extrémité (7) raccordée à l'entrée (8).

6. Vanne électromagnétique selon l'une quelconque des revendications 1 à 5, **caractérisée en ce qu'**elle présente un boîtier (3) de forme tubulaire, qui est rétréci en direction de chacune de ses extrémités (16, 17), qui forme une sortie (11, 12).

7. Vanne électromagnétique selon l'une quelconque des revendications 1 à 7, **caractérisée en ce qu'**elle présente au moins une sortie (11, 12) conçue comme tube capillaire (18).
